# EUROPÄISCHE PATENTSCHRIFT

(11) **EP 1 741 596 B1**
(45) Veröffentlichungstag und Bekanntmachung des Hinweises auf die Patenterteilung: **05.08.2009**
(21) Anmeldenummer: 06013568.8
(22) Anmeldetag: 30.06.2006
(51) Int. Cl.: B60P 1/44

(54) **Hubladebühne**
Loading tailgate
Hayon élévateur

(30) Priorität: 08.07.2005 DE 102005032347; 27.07.2005 DE 102005035021
(43) Veröffentlichungstag der Anmeldung: 10.01.2007
(73) Patentinhaber: MBB Palfinger GmbH, 27777 Ganderkesee (DE)
(72) Erfinder: Helpup, Thomas, 27753 Delmenhorst (DE)
(74) Vertreter: Möller, Friedrich

(56) Entgegenhaltungen:
- EP-A- 1 213 176
- EP-A- 1 541 412
- DE-A1- 19 839 058
- DE-C1- 10 205 669
- US-A- 5 277 275

## Beschreibung

Die Erfindung betrifft eine Hubladebühne gemäß dem Oberbegriff des Anspruchs 1.

Hubladebühnen dienen dazu, das Be- und Entladen von Fahrzeugen mit insbesondere schweren Gegenständen zu erleichtern. Eine solche beispielsweise aus der EP-A-1 213 176 bekannte Hubladebühne verfügt über eine vorzugsweise an der Rückseite eines Aufbaus eines Fahrzeugs schwenk-, heb- und senkbar angelenkte Ladeplattform. Zum Heben, Senken und/oder Verschwenken der Ladeplattform dient ein Hubwerk mit zwei parallelen Lenkerarmen, die einerseits mit dem Aufbau des Fahrzeugs und andererseits mit einer zum Aufbau des Fahrzeugs weisenden Querkante der Ladeplattform drehbar verbunden sind.

Die Erfindung bezieht sich auf eine Hubladebühne, bei der das Hubwerk nur einen Hubzylinder aufweist. Dieser ist aus Platzgründen außermittig in der Nähe eines Lenkerarms angeordnet. Das führt insbesondere bei einer ungleichmäßigen Beladung der Ladeplattform dazu, dass die Lenkerarme nicht synchron angehoben oder abgesenkt werden. Bei hochgefahrener Ladeplattform entsteht dadurch ein sich zu einer Längsseite der Ladeplattform vergrößernder, seitlicher Spalt zwischen der Hinterkante des Aufbaus des Fahrzeugs und der zu dieser weisenden Querkante der Ladeplattform. Dieser Spalt wirkt sich als störend aus, wenn durch beispielsweise einen Gabelhubwagen ein auf der Ladeplattform sich befindender Gegenstand auf die Ladefläche des Fahrzeugs oder umgekehrt bewegt werden soll.

Es ist bereits aus der DE 102 05 669 C1 eine Hubladebühne bekannt, die ein Hubwerk mit nur einem Hubzylinder aufweist. Das Hubwerk verfügt über zwei Lenkerarme, die einem Koppelorgan zugeordnet sind. Ein Lenkerarm ist mit dem Koppelorgan fest verbunden, während der andere Lenkerarm um eine von der Längsmittelachse des Koppelorgans beabstandete Drehachse beweglich gelagert ist. Dadurch wird die Bildung des eingangs genannten ungleichförmigen, sich einseitig erweiternden Spalts zwar verhindert, das Hubwerk verfügt aber wegen der Lagerung eines Lenkerarms an einer separaten Drehachse, die nicht auf der Längsachse des Koppelorgans liegt, über einen recht komplexen Aufbau. Außerdem kann es bei dieser bekannten Hubladebühne Beladezustände der Ladeplattform geben, bei denen der Spalt nicht oder nicht ganz beseitigbar ist.

Der Erfindung liegt nun die Aufgabe zugrunde, eine Hubladebühne zu schaffen, bei der das nur einen Hubzylinder aufweisende Hubwerk mit einfachen Mitteln zuverlässig die Bildung eines ungleichförmigen, keilförmigen Spalts zwischen der Ladeplattform und dem Aufbau des Fahrzeugs vermeidet bzw. beseitigt.

Eine Hubladebühne zur Lösung dieser Aufgabe weist die Merkmale des Anspruchs 1 auf. Demnach ist nur einer der beiden Lenkerarme unverdrehbar mit dem Koppelorgan verbunden, während der andere Lenkerarm drei drehbar gegenüber dem Koppelorgan ist. Weiterhin sind die Lenkerarme relativ zueinander frei drehbar, und zwar um eine gemeinsame Längsachse, insbesondere Drehachse, die auf der Längsmittelachse des länglichen Koppelorgans liegt, und es liegt eine Drehachse des einen, frei drehbaren Lenkerarms auf einer Längsmittelachse des länglichen Koppelorgans, wodurch jeweils einander gegenüberliegende Enden beider Lenkerarme auf einer gleichen bogenförmigen Bahn mit Mittelpunkt auf der Längsmittelachse des Koppelorgans bewegbar sind. Bei einer solchen Hubladebühne kann dann, wenn aufgrund beispielsweise einer ungleichmäßigen Beladung der Ladeplattform von einem Lenkerarm ein Teil der Querkante der Ladeplattform gegen eine starre Hinterkante des Aufbaus gefahren ist, durch eine weitere Betätigung des Huborgans vom anderen Lenkerarm der übrige Teil der Querkante der Ladeplattform ebenfalls zur Anlage an der Hinterkante des Aufbaus gebracht werden. Eine solche Weiterbewegung des "nachlaufenden" Lenkerarms lässt das Koppelorgan durch insbesondere eine elastische Verformung und einen gegenüber dem Koppelorgan verdrehbaren Lenkerarm zu. Es kann so auf einfache Weise die Entstehung eines Spalts zwischen der Ladeplattform und dem Aufbau des Fahrzeugs zuverlässig vermieden werden.

Es sind verschiedene Lagerungen dieses frei drehbaren Lenkerarms am Koppelorgan oder mindestens einem Teil des Koppelorgans denkbar. Es ist aber auch möglich, einen Lenkerarm frei drehbar am oder auf dem Koppelorgan, insbesondere an einem Ende oder einem Endbereich desselben, zu lagern.

Die Lenkerarme sind bei einer bevorzugten Ausgestaltung der Erfindung gegenüberliegenden Enden des ein- oder auch mehrteilig ausgebildeten Koppelorgans zugeordnet. Vorzugsweise ist jeder Lenkerarm in der Nähe eines mit der Ladeplattform verbundenen freien Endes einem der gegenüberliegenden Enden des länglichen Koppelorgans zugeordnet, wobei insbesondere die jeweiligen Befestigungsstellen der Lenkerarme am Koppelorgan auf einer Längsmittelachse des Koppelorgans liegen. Das längliche Koppelorgan kann dadurch in ausreichendem Maße ausschließlich elastisch verformt werden, um den Nachlauf eines Lenkerarms auszugleichen.

Am Koppelorgan greift der einzige Hubzylinder zum Heben und Senken der Ladeplattform an. Vorzugsweise ist der einzige Hubzylinder außermittig am Koppelorgan angelenkt, und zwar in der Nähe eines Endbereichs, der dem fest mit dem einen Lenkerarm verbundenen Ende des Koppelorgans gegenüberliegt. Dadurch befindet sich der Hubzylinder in der Nähe oder dicht neben dem jeweiligen Lenkerarm, der gegenüber mindestens einem Teil des Koppelorgans frei drehbar ist. Auf diese Weise wird die Kraft des Hubzylinders über nahezu die gesamte Länge des Koppelorgans auf den fest damit verbundenen Lenkerarm übertragen, wodurch ein Großteil der Länge des Koppelorgans sich elastisch verformen kann, um bei Anlage des fest mit dem Koppelorgans verbundenen Lenkerarms an der Hinterkante des Aufbaus den verdrehbaren Lenkerarm in der Nähe des Hubzylinders sozusagen nachzuziehen, damit auch dieser an der Hinterkante des Aufbaus zur Anlage kommt und ein eventueller zur Seite des frei beweglichen Lenkerarms sich vergrößernder Spalt zwischen der Ladeplattform und dem Aufbau kompensiert wird. Umgekehrt kann dann, wenn der gegenüber dem Koppelorgan verdrehbare Lenkerarm zuerst am Aufbau anschlägt, der unverdrehbar am Koppelorgan befestigte Lenkerarm über das Koppelorgan "nachgezogen" werden.

Das Koppelorgan ist als ein- oder mehrteiliges längliches Rohr oder auch eine längliche Stange ausgebildet. Die Stange oder das Rohr sind um ihre Längsachse, insbesondere Längsmittelachse, elastisch verdrehbar, insbesondere im elastischen Bereich tordierbar. Dadurch ist es möglich, den frei dehbar auf oder am Koppelorgan gelagerten Lenkerarm vom Hubzylinder weiterhin zu verschwenken, wenn der fest mit dem Koppelorgan verbundene Lenkerarm bereits an der Hinterkante des Aufbaus anliegt und dadurch seine Endposition erreicht hat. Die Weiterbewegung des Huborgans zum Verschwenken des frei drehbaren Lenkerarms wird aufgefangen durch das Verdrehen bzw. Tordieren mindestens eines Teils des Koppelorgans um die quer zur Fahrtrichtung des Fahrzeugs verlaufende Längsachse des Koppelorgans, die auf diese Weise zur Torsionsachse wird.

Gemäß einer bevorzugten Ausgestaltung der Erfindung ist das Koppelorgan aus zwei Teilen gebildet, die auf einer gemeinsamen quer zur Fahrtrichtung des Fahrzeugs verlaufenden und im Wesentlichen horizontalen Längsachse, insbesondere der Torsionsachse, des Koppelorgans liegen. Das zweiteilige Koppelorgan weist ein längeres und ein kürzeres Koppelteil auf. An einem Ende des längeren Koppelteils ist ein Lenkerarm drehfest angebracht. Dadurch steht eine möglichst große wirksame Länge des Koppelorgans zur elastischen Torsion zur Verfügung.

Es ist weiterhin vorgesehen, den anderen Lenkerarm fest mit dem kürzeren Koppelteil, und zwar einem außenliegenden Ende desselben, zu verbinden. So ist der andere Lenkerarm zusammen mit dem kürzeren Koppelteil verdrehbar. In diesem Falle kommt die Verdrehbarkeit dieses am kürzeren Koppelteil drehfest angeordneten Lenkerarms gegenüber dem übrigen Teil des Koppelorgans und dem damit fest verbundenen Lenkerarm zustande, indem das kürzere Koppelteil drehbar im oder am längeren Koppelteil gelagert ist. Es ist aber auch denkbar, den dem kürzeren Koppelteil zugeordneten Lenkerarm drehbar am oder auf dem kürzeren Koppelteil zu lagern, wodurch beide Koppelteile unverdrehbar verbunden werden können.

Das längere Koppelteil ist vorzugsweise als ein Torsionsrohr oder alternativ auch als eine Torsionsstange ausgebildet. Diese verfügen bei einer bevorzugten Ausgestaltung der Erfindung über einen runden Querschnitt. Das kürzere Koppelteil ist als kurze Stange oder ein kurzes Rohr ausgebildet, und zwar ebenfalls mit vorzugsweise rundem Querschnitt. Wenn das längere Koppelteil als Torsionsrohr ausgebildet ist, ist das kürzere Koppelteil als eine kurze Stange ausgebildet, die einen Außendurchmesser aufweist, der mit geringfügigem Spiel in das Torsionsrohr einschiebbar ist. Umgekehrt kann bei einem rohrförmig ausgebildeten kürzeren Koppelteil das längere Koppelteil als eine Torsionsstange ausgebildet sein, deren Außendurchmesser etwas geringer als der Innendurchmesser des als Rohr ausgebildeten Koppelteils ist. Durch die beschriebene Ausbildung der beiden Koppelteile lassen sich diese gleichachsig ineinanderschieben zur Bildung des Koppelorgans. Außerdem sind die beiden Koppelteile dann relativ zueinander um die Längsachse bzw. Torsionsachse verdrehbar, so dass die Lenkerarme mit außenliegenden freien Enden sowohl des längeren Koppelteils als auch des kürzeren Koppelteils drehfest verbunden sein können, gleichwohl aber noch der am kürzeren Koppelteil befestigte Lenkerarm mit dem kürzeren Koppelteil gegenüber dem längeren Koppelteil und dem darin fest angebrachten gegenüberliegenden Lenkerarm verdrehbar ist, und zwar auch um die Längs- bzw. Torsionsachse des Koppelorgans, indem die Drehachse dieses Lenkerarms auf der gemeinsamen Längs- bzw. Torsionsachse beider Koppelteile des Koppelorgans liegt.

Schließlich ist gemäß einer bevorzugten Weiterbildung der Hubladebühne vorgesehen, im Bereich des freien Endes des Torsionsrohrs oder der Torsionsstange den Hubzylinder anzulenken, und zwar vorzugsweise dadurch, dass im Bereich des freien Endes des Torsionsrohrs oder der Torsionsstange ein kurzer Hebel oder mindestens eine Lasche drehfest angeordnet sind, woran der Hubzylinder mit einem Ende angreift. Das Ansetzen des Hubzylinders am freien Ende des Torsionsrohrs führt dazu, dass die vom Hubzylinder aufgebrachte Kraft über nahezu die gesamte Länge des Torsionsrohrs auf den daran unverdrehbar befestigten Lenkerarm übertragen wird. Auf diese Weise gewährleistet das Torsionsrohr eine möglichst große Verformung, und zwar nur eine elastische Verformung, um die Längsachse bzw. Torsionsachse des Torsionsrohrs, wodurch auch große einseitige Spalträume zwischen der Querkante der Ladeplattform und der Hinterkante des Aufbaus des Fahrzeugs ausgeglichen werden können. Das geschieht, indem nach dem Anschlagen eines Lenkerarms bzw. eines diesem zugeordneten Teils der Querkante der Ladeplattform am Aufbau durch weiteres Ausfahren des Hubzylinders der gegenüberliegende Lenkerarm nachgezogen wird, weil durch die besondere Ausbildung des Koppelorgans und die unverdrehbare Lagerung nur eines Lenkerarms am Koppelorgan die Lenkerarme beim Anliegen eines Lenkerarms an einen Anschlag, beispielsweise des Fahrzeugaufbaus oder des Fahrzeugunterbaus, sich unabhängig voneinander um die Längs- oder Torsionsachse des Koppelorgans bewegen können. Insbesondere ist bei Anlage eines Lenkerarms am Anschlag der andere Lenkerarm noch weiterhin bewegbar bzw. verdrehbar, bis auch er den Anschlag erreicht hat.

Bevorzugte Ausführungsbeispiele der erfindungsgemäßen Hubladebühne werden nachfolgend anhand der Zeichnung näher erläutert. In dieser zeigen:
- Fig. 1: eine perspektivische Ansicht eines hinteren Teils eines Fahrwerksrahmens eines Fahrzeugs mit einem Hubwerk der Hubladebühne,
- Fig. 2: eine Seitenansicht eines hinteren Teils des Fahrzeugs mit der Hubladebühne in einer Fahrstellung,
- Fig. 3: eine perspektivische Ansicht eines Teils des Hubwerks der Hubladebühne,
- Fig. 4: eine perspektivische Ansicht eines Teils des in der Fig. 3 gezeigten Hubwerks,
- Fig. 5: eine Draufsicht auf das Hubwerk der Fig. 3,
- Fig. 6: eine vergrößerte Einzelheit VI aus der Fig. 5 im teilweise geschnittenen Zustand,
- Fig. 7: einen Querschnitt VII-VII durch das Hubwerk der Fig. 5,
- Fig. 8: eine Ansicht eines Hubwerks eines zweiten Ausführungsbeispiels der Erfindung analog zur Fig. 5, und
- Fig. 9: eine vergrößerte Einzelheit IX des Hubwerks der Fig. 8 im teilweise geschnittenen Zustand.

Die Figuren zeigen teilweise ein Fahrzeug, und zwar einen Lastkraftwagen 10. Der Lastkraftwagen 10 verfügt über einen Aufbau 11, bei dem es sich im gezeigten Ausführungsbeispiel um einen sogenannten Kofferaufbau handelt. Der Aufbau 11 verfügt über eine mindestens teilweise offene Rückseite 12. Vorzugsweise ist die Rückseite 12 durch Türen oder dergleichen zu öffnen. An der Unterkante der Rückseite 12 ist der Aufbau 11 mit einem quergerichteten Anschlagprofil 13 versehen.

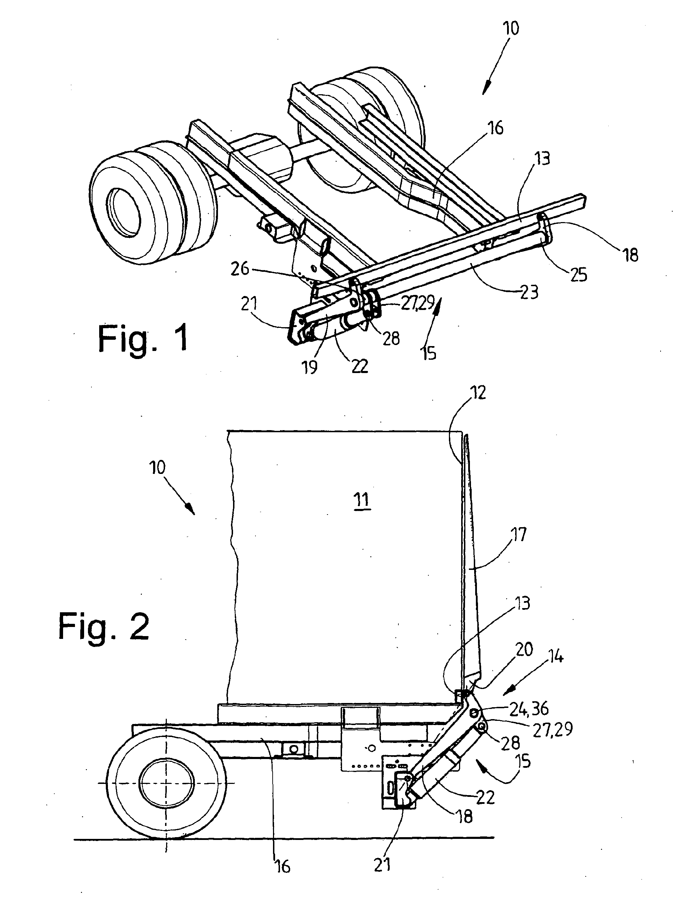

Der Rückseite des Lastkraftwagens 10 ist die erfindungsgemäße Hubladebühne 14 zugeordnet. Die Hubladebühne 13 verfügt über ein Hubwerk 15, das an einem nur andeutungsweise in den Fig. 1 und 2 dargestellten Fahrwerksrahmens 16 des Lastkraftwagens 10 befestigt ist. Das Hubwerk 15 trägt eine Ladeplattform 17, die aus Vereinfachungsgründen und der besseren Übersicht halber nur in der Fig. 2 gezeigt ist, und zwar in der Schließstellung, in der sie hochgefahren und gegen die Rückseite 12 des Aufbaus 11 geschwenkt ist. In der Fahrstellung des Lastkraftwagens 10 befindet sich dadurch die Ladeplattform 17 vollständig hinter dem Aufbau 11.

Das Hubwerk 15 ist in den Figuren nur teilweise dargestellt, nämlich mit den gemäß der Erfindung besonders ausgebildeten Teilen. Das Hubwerk 15 weist zwei gleiche, in parallelen vertikalen Ebenen bewegbare Lenkerarme 18 und 19 auf. Zwischen den Lenkerarmen 18 und 19 befindet sich ein längliches Koppelorgan, das mindestens größtenteils rohrartig ausgebildet ist. Das Koppelorgan verbindet die Lenkerarme 18 und 19. Die Lenkerarme 18 und 19 sind schwenkbar mit einer Querkante 20 der Ladeplattform 17 verbunden. Hierbei handelt es sich um die zur Rückseite 12 des Aufbaus 11 weisende Querkante 20, die bei in die Fahrstellung des Lastkraftwagens 10 hochgeschwenkter Ladeplattform 17 (Fig. 2) eine Unterkante der Ladeplattform 17 bildet. Die Lenkerarme 18 und 19 sind im Bereich gegenüberliegender Enden der Querkante 20 mit der Ladeplattform 17 verbunden. Die der Ladeplattform 17 gegenüberliegenden Enden der Lenkerarme 18 und 19 sind schwenkbar mit einer quer zur Fahrtrichtung des Lastkraftwagens 10 verlaufenden Traverse 21 verbunden. Die Traverse 21 ist im rückwärtigen Bereich des Fahrwerksrahmens 16 des Lastkraftwagens 10 befestigt.

Die Hubladebühne verfügt über nur einen einzigen Hubzylinder 22, bei dem es sich vorzugsweise um einen Hydraulikzylinder handelt. Der Hubzylinder 22 dient zum Heben und Senken der Ladeplattform 17. Darüber hinaus verfügt das Hubwerk 15 der Hubladebühne über mindestens einen vorzugsweise auch als Hydraulikzylinder ausgebildeten Schwenkzylinder, der aus Gründen der besseren Übersichtlichkeit in den Figuren nicht dargestellt ist. Der mindestens eine Schwenkzylinder greift einerseits an der Traverse 21 und andererseits an einem nicht gezeigten Schwenkarm an der Querkante 20 der Ladeplattform 17 an und dient dazu, die Ladeplattform zu verschwenken, und zwar von der in der Fig. 2 nicht gezeigten aufrechten Fahrstellung in eine nicht gezeigte im Wesentlichen horizontale oder leicht geneigte Betriebsstellung.

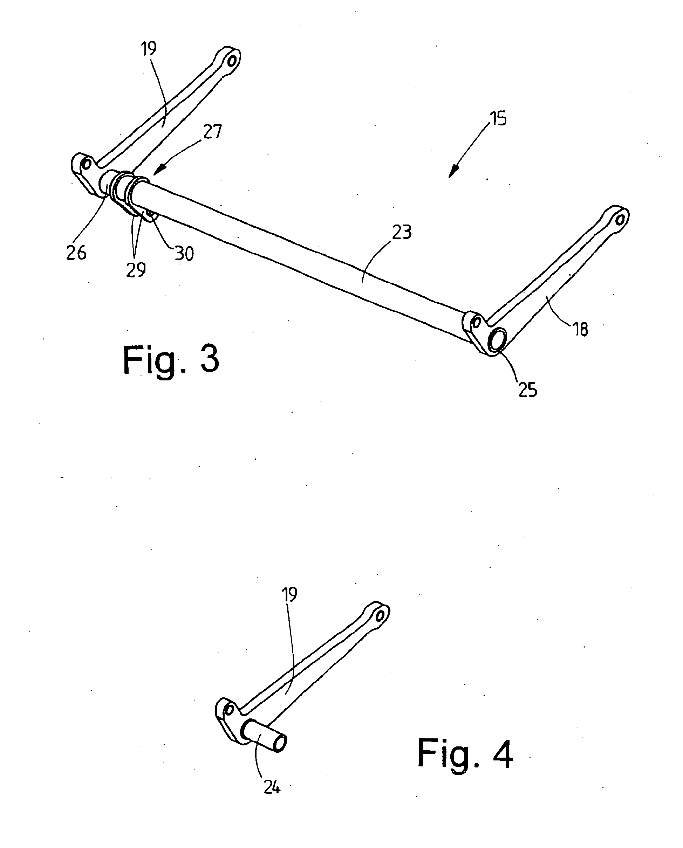

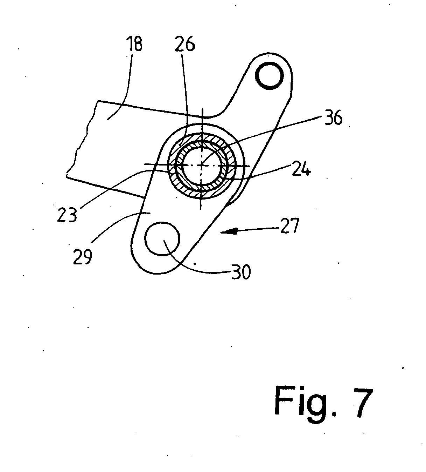

In erfindungsgemäß besonderer Weise ist das Koppelorgan zwischen den gegenüberliegenden Seiten der Ladeplattform 17 zugeordneten Lenkerarm 18 und 19 ausgebildet. Im Ausführungsbeispiel der Fig. 4 bis 7 besteht das Koppelorgan aus zwei Teilen, und zwar ein sich durchgehend zwischen den Lenkerarmen 18 und 19 erstreckendes längeres Teil und ein in ein Ende des längeren Teils eingeschobenes kürzeres Teil. Das längere Teil ist als ein Torsionsrohr 23 mit kreisringförmigem Querschnitt ausgebildet (Fig. 7). Das Torsionsrohr 23 erstreckt sich durchgehend zwischen den Lenkerarmen 18 und 19. Der Innendurchmesser des Torsionsrohrs 23 ist so gewählt, dass es etwas größer ist als der Außendurchmesser des kürzeren Teils des Koppelorgans (Fig. 7). Dieses kürzere Teil des Koppelorgans ist im gezeigten Ausführungsbeispiel als ein kurzer Rohrstutzen 24 mit ebenfalls kreisringförmigem Querschnitt ausgebildet. Der Außendurchmesser des Rohrstutzens 24 entspricht dem Innendurchmesser des Torsionsrohrs 23, so dass der Rohrstutzen 24 mit geringfügigem Spiel in ein Ende des Torsionsrohrs 23 einschiebbar ist (Fig. 7), und zwar so, dass der Rohrstutzen 34 im Torsionsrohr 23 frei drehbar ist. Die Längsachse des Rohrstutzens 24 liegt dabei auf der gleichzeitig als Torsionsachse 36 dienenden Längsachse des Torsionsrohrs 23. An der Stelle des Rohrstutzens 24 kann das kürzere Teil des Koppelorgans auch als ein massiver Achsstutzen ausgebildet sein, mit einem zum Innendurchmesser des Torsionsrohrs 23 korrespondieren Außendurchmesser. Die Länge des Rohrstutzens 24 bzw. des Achsstutzens ist so gewählt, dass der Rohrstutzen 24 bzw. der Achsstutzen unverkippbar im Endbereich des Torsionsrohrs 23 verdrehbar ist.

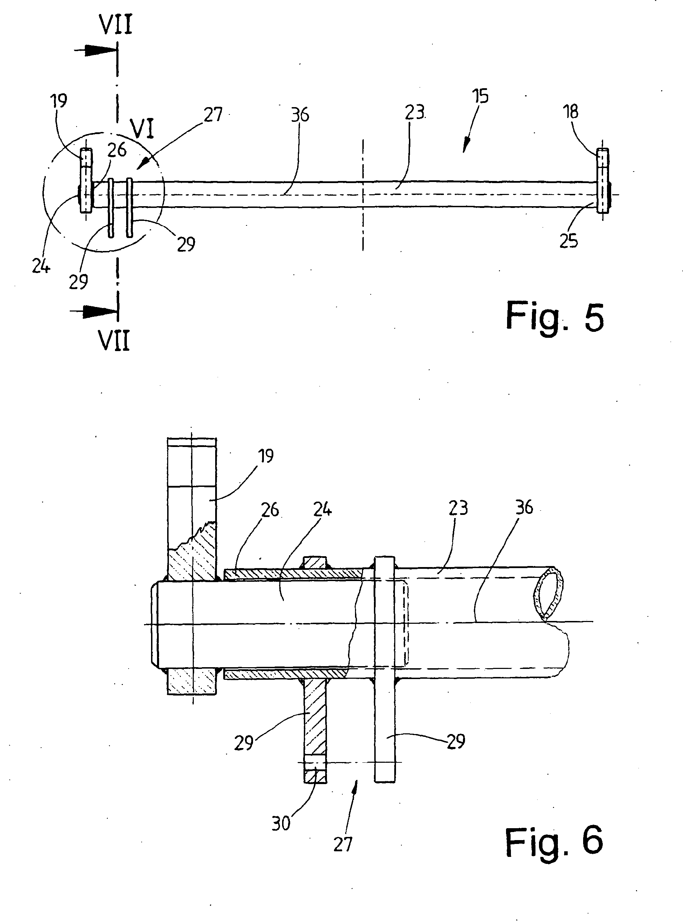

Ein (in den Fig. 3 und 5 rechter) Lenkerarm 18 ist fest und unverdrehbar mit einem ihm zugeordneten Ende 25 des Torsionsrohrs 23 verbunden, und zwar vorzugsweise verschweißt. Dabei liegt die Verbindungsstelle dieses rechten Lenkerarms 18 auf der Längs- bzw. Torsionsachse 36 des Torsionsrohrs 23. Diese Verbindungsstelle befindet sich außerdem in der Nähe desjenigen Endes des Lenkerarms 18, das an der Querkante 20 der Ladeplattform 17 angelenkt ist. Das gegenüberliegende Ende 26 des Torsionsrohrs 23 ist frei gelassen, nämlich nicht direkt mit dem gegenüberliegenden (in den Figuren linken) Lenkerarm 19 verbunden. Dieser Lenkerarm 19 ist vielmehr unverdrehbar mit dem Rohrstutzen 24 verbunden, und zwar vorzugsweise fest verschweißt. Auch diese Verbindung erfolgt so, dass die Verbindungsstelle des Lenkerarms 19 mit dem Rohrstutzen 24 auf der Längsmittelachse desselben und damit auch auf der Längsmittelachse bzw. Torsionsachse 36 des Torsionsrohrs 23 liegt, wobei die Verbindungsstelle dicht am der Ladeplattform 17 zugeordneten Ende des Lenkerarms 17 liegt. Auf diese Weise kann der am Lenkerarm 19 befestigte Rohrstutzen 24 gleichachsig in das freie Ende 26 des Torsionsrohrs 23 axial eingeschoben werden, wodurch der Lenkerarm 19 drehbar, und zwar insbesondere frei drehbar, im bzw. am Ende 26 des Torsionsrohrs 23 gelagert ist. Dadurch liegen die Drehpunkte der Lenkerarme 18, 19 sich auf einer gleichen Achse gegenüber, nämlich auf entgegengesetzten Enden der Längsachse bzw. der Torsionsachse 36 des Torsionsrohrs 23 und des Rohrstutzens 24. Um diese auf der gleichen Achse, vorzugsweise der Torsionsachse 36, liegenden Drehpunkte sind die Lenkerarme 18 und 19 relativ zueinander verdrehbar. Die Lagerung des Rohrstutzens 24 im Torsionsrohr 23 kann gegebenenfalls auch mindestens ein Gleit- und/oder Wälzlager aufweisen. Dadurch kann sich der Lenkerarm 19 frei gegenüber dem Torsionsrohr 23 um die Längsachse bzw. Torsionsachse 36 des Torsionsrohrs 23 verdrehen, während im Übrigen eine stabile Lagerung auch des Lenkerarms 19 am Ende 26 bzw. in der Nähe des Endes 26 gelagert ist.

Auf dem zum verdrehbaren (linken) Lenkerarm 19 weisenden Endbereich des Torsionsrohrs 23, und zwar in der Nähe des Endes 26 des Torsionsrohrs 23, ist eine Lagerstelle 27 für den Hubzylinder 22, und zwar im gezeigten Ausführungsbeispiel ein kolbenstangenseitiges Ende 28 desselben, angeordnet. Die Lagerstelle 27 befindet sich dadurch in der Nähe des gegenüber dem Torsionsrohr 23 um die Längsachse desselben drehbaren bzw. verschwenkbaren Lenkerarms 19, wobei auch der Drehpunkt des Lagerarms 19 auf der Torsionsachse 36, also der Längsmittelachse des Torsionsrohrs 23, liegt. Gebildet ist die Lagerstelle 27 im gezeigten Ausführungsbeispiel aus zwei mit geringem Abstand parallel zueinander verlaufenden Laschen 29, die unverdrehbar in der Nähe des zum Lenkerarm 19 weisenden Endes 26 des Torsionsrohrs 23 mit demselben verbunden sind, vorzugsweise durch Schweißen. Die parallelen Laschen 29 der Lagerstelle 27 bilden so einen kurzen Hebelarm für den Hubzylinder 22. Zu diesem Zweck weist jede Lasche 29 eine Durchgangsbohrung 30 auf, wobei die Durchgangsbohrung 30 beider Laschen 29 auf einer gemeinsamen Achse liegen, die parallel zur Drehachse bzw. Torsionsachse 36 des Torsionsrohrs 23 verläuft. Um diese Achse drehbar und somit gelenkig ist das kolbenstangenseitige Ende 28 des Hubzylinders 22 mit den die Lagerstelle 27 bildenden Laschen 29 verbunden. Der Hubzylinder 22 erzeugt so beim Ausfahren eine Hubbewegung der Lenkerarme 18 und 19 des Hubwerks 15 sowie die Einleitung einer Torsionskraft in das Torsionsrohr 23.

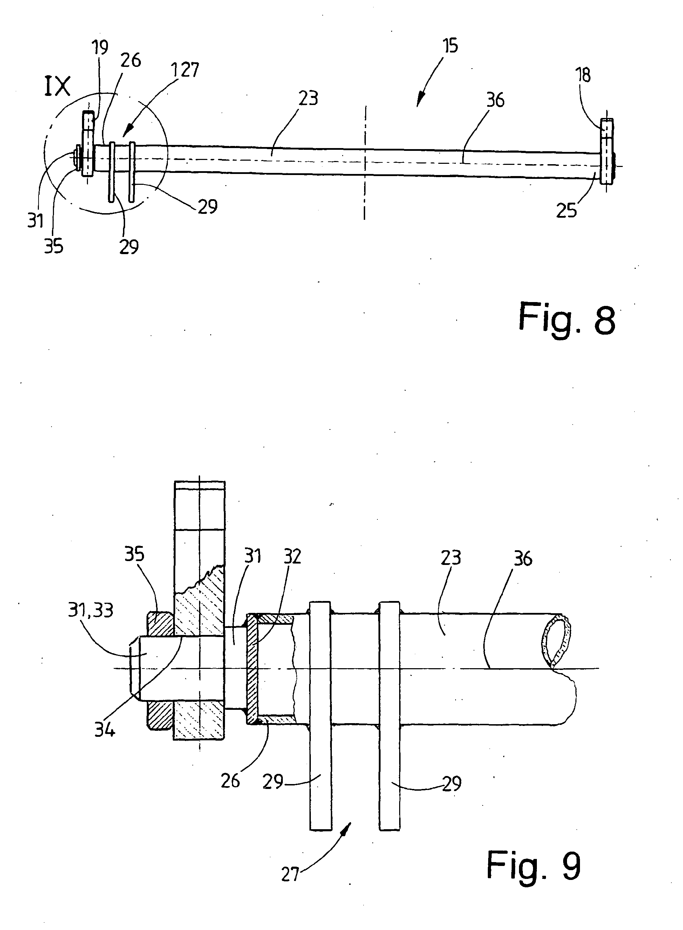

Die Fig. 8 und 9 zeigen ein zweites Ausführungsbeispiel der Erfindung, dass sich vom zuvor beschriebenen Ausführungsbeispiel nur durch eine andere drehbare Lagerung des (linken) Lenkerarms 19 am Torsionsrohr 23 des Koppelorgans unterscheidet. Es werden für gleiche Teile gleiche Bezugsziffern verwendet.

Das Ende 26 des Torsionsrohrs 23 ist mit einem Achsstummel 31 verbunden, der massiv oder auch aus einem Rohr gebildet sein kann. Der Achsstummel 31 ist mit einer Stirnplatte 32 verschweißt, die wiederum vor die Stirnseite am Ende 26 des Torsionsrohrs 23 geschweißt ist, um das Torsionsrohr 23 am Ende 26 zu verschließen. Es ist aber auch denkbar, den Achsstummel 31 und die Stirnplatte 32 einstückig auszubilden. Außerdem ist es denkbar, auf die Stirnplatte 32 ganz zu verzichten und den Achsstummel 31 länger auszubilden, so dass er fest in ein vom Ende 26 ausgehenden Endbereich des Torsionsrohrs 23 einschiebbar ist und hiermit drehfest durch zum Beispiel Schweißen verbunden ist. Auf einem endseitigen und im Durchmesser reduzierten Abschnitt 33 des Achsstummels 31 ist drehbar der Lenkerarm 19 gelagert, wozu der Lenkerarm 19 eine korrespondierende Durchgangsbohrung 34 aufweist, die so bemessen ist, dass sie eine freie Drehbarkeit des Lenkerarms 19 auf dem Abschnitt 33 des Achsstummels 31 zulässt. Gegebenenfalls kann der Lenkerarm 19 auf dem Abschnitt 33 des Achsstummels 31 mit einem Gleit- oder auch Wälzlager drehend gelagert sein. Axial auf dem Abschnitt 33 gesichert ist der Lenkerarm 19 durch eine Anschlaghülse 35, die durch geeignete Mittel mindestens unverschiebbar auf dem Ende des Abschnitts 33 des Achsstummels 31 gehalten ist. Die Anschlaghülse 35 kann auch auf ein entsprechendes Gewinde auf dem Abschnitt 33 des Achsstummels 31 aufgeschraubt und gegen Lösen durch übliche Schraubensicherung gesichert sein.

Beim beschriebenen Ausführungsbeispiel ist das Koppelorgan einstückig ausgebildet, besteht nämlich nur aus dem Torsionsrohr 23 mit dem daran fest angeordneten Achsstummel 31, dessen Längsachse mit der Längsachse, nämlich der Torsionsachse 36, des Torsionsrohrs 23 zusammenfällt. Demzufolge ist im Gegensatz zum Ausführungsbeispiel der Fig. 1 bis 7 der Lenkerarm 19 mit keinem Rohrstutzen 24 verbunden, der beim gezeigten Ausführungsbeispiel der Fig. 8 bis 9 entfällt und ersetzt ist durch den mit dem Ende 26 des Torsionsrohrs 23 verbundenen Achsstummel 31. Durch die freie Drehbarkeit des Lenkerarms 19 auf dem Achsstummel 31 ist aber auch beim Ausführungsbeispiel der Fig. 8 und 9 der Lenkerarm 19 um die gleichzeitig die Torsionsachse 36 bildende Längsachse des Torsionsrohrs 23 verdrehbar. Dadurch ist auch eine Relativbewegung der Lenkerarme 18 und 19 untereinander um eine gemeinsame Drehachse, die auf der Torsionsachse 36 liegt, gegeben.

Nachfolgend wird die Funktionsweise beider vorstehend beschriebenen Ausführungsbeispiele der Hubladebühne näher erläutert:

Die beiden Lenkerarme 18, 19, das Torsionsrohr 23 mit dem Rohrstutzen 24 bzw. dem Achsstummel 31 und die Querkante 20 der Ladeplattform 17 bilden ein rahmenartiges Kräfteviereck. Aufgrund des nur einen Hubzylinders 22, der außermittig in der Nähe des im Bezug auf die Figuren linken Lenkerarms 19 angeordnet ist, werden beim Anheben der Lasten tragenden Ladeplattform 17 die Lenkerarme 18 und 19 nicht synchron aufwärts bewegt; es eilt vielmehr einer der Lenkerarme 18 oder 19 nach. Das gilt insbesondere dann, wenn die Ladeplattform 17 ungleichmäßig bzw. außermittig beladen ist.

Im Folgenden wird davon ausgegangen, dass im Bezug auf die Darstellungen in den Figuren, also gegen die Rückseite 12 des Lastkraftwagens 10 gesehen, durch beispielsweise eine Beladung nur der linken Seite der Ladeplattform 17 der linke Lenkerarm 19 gegenüber dem rechten Lenkerarm 18 nacheilt. Dann schlägt zunächst der rechte Lenkerarm 18 am Anschlagprofil 13 an der Unterkante der Rückseite 12 des Aufbaus 11 des Lastkraftwagens 10 an. Zu diesem Zeitpunkt ist der linke Lenkerarm 19 noch etwas vom Anschlagprofil 13 entfernt. Durch weiteres Ausfahren des Hubzylinders 22 wird der linke Lenkerarm 19 weiterbewegt, bis auch er zur Anlage am Anschlagprofil 13 kommt. Die erfindungsgemäß Ausgestaltung des Hubwerks 15 macht dieses möglich, weil zum einen das Torsionsrohr 23 um die Torsionsachse 36 verdrehbar ist und dadurch der Hubzylinder 22 weiter ausfahren kann, obwohl der am Torsionsrohr 23 unverdrehbar angeordnete Lenkerarm 18 bereits am Anschlagprofil 13 anliegt und sich demzufolge nicht mehr weiter bewegen kann und zum anderen der linke Lenkerarm 19 gegenüber dem ihm zugeordneten Ende 26 des Torsionsrohrs 23 um die Torsionsachse 36 bzw. Längsachse des das Koppelorgan bildenden Torsionsrohrs 23 frei verdrehbar ist.

Ist hingegen nur überwiegend die rechte Hälfte der Ladeplattform 17 beladen, wird der linke Lenkerarm 19 beim Anheben der Ladeplattform 17 gegenüber dem rechten Lenkerarm 18 voreilen. In diesem Falle kommt zunächst der linke Lenkerarm 19 zur Anlage am Anschlagprofil 13, während der rechte Lenkerarm 18 noch vom Anschlagprofil 13 entfernt ist. Durch weiteres Ausfahren des Hubzylinders 22 wird über das Torsionsrohr 23 der rechte Lenkerarm 18 weiterbewegt, bis auch er am Anschlagprofil 13 anschlägt. Ermöglicht wird dieses dadurch, dass der linke Lenkerarm 19 gegenüber dem ihm zugeordneten Ende 26 des Torsionsrohrs 23 um die Torsionsachse 36 oder Längsachse desselben verdrehbar ist, und zwar entweder durch eine gleichachsige Verdrehung des Rohrstutzen 24 im Endbereich des Torsionsrohrs 23 oder durch ein Verdrehen des Lenkerarms 19 auf dem Achsstummel 31 am oder im Ende 26 des Torsionsrohrs 23 um die Längsachse bzw. Torsionsachse 23 desselben. Auf diese Weise wird durch eine Relativbewegung der Lenkerarme 18 und 19 zueinander um eine gemeinsam auf der Torsionsachse 36 liegende Drehachse der rechte Lenkerarm 18 gegenüber dem voreilenden linke Lenkerarm 19 nachgezogen, bis wiederum beide Lenkerarme 18 und 19 am Anschlagprofil 13 des Aufbaus 11 des Lastkraftwagens 10 anliegen.

### Bezugszeichenliste:

- 10: Lastkraftwagen
- 11: Aufbau
- 12: Rückseite
- 13: Anschlagprofil
- 14: Hubladebühne
- 15: Hubwerk
- 16: Fahrwerksrahmen
- 17: Ladeplattform
- 18: Lenkerarm
- 19: Lenkerarm
- 20: Querkante
- 21: Traverse
- 22: Hubzylinder
- 23: Torsionsrohr
- 24: Rohrstutzen
- 25: Ende
- 26: Ende
- 27: Lagerstelle
- 28: kolbenstangenseitiges Ende
- 29: Lasche
- 30: Durchgangsbohrung
- 31: Achsstummel
- 32: Stirnplatte
- 33: Abschnitt
- 34: Durchgangsbohrung
- 35: Anschlaghülse
- 36: Torsionsachse

## Patentansprüche

1. Hubladebühne mit einer Ladeplattform (17) und einem Hubwerk (15) zum Heben, Senken und Verschwenken der Ladeplattform (17), wobei das Hubwerk (15) zwei Lenkerarme (18, 19), ein Koppelorgan zwischen den Lenkerarmen (18, 19) und einen in der Nähe eines Lenkerarms (19) angeordneten Hubzylinder (22) aufweist, wobei ein Lenkerarm (18) unverdrehbar mit dem Koppelorgan verbunden ist und ein anderer Lenkerarm (19) drehbar mit dem Koppelorgan verbunden oder an mindestens einem Teil des Koppelorgans gelagert ist, **dadurch gekennzeichnet, dass** die Lenkerarme (18, 19) relativ zueinander um eine auf einer Längsmittelachse des Koppelorgans liegende gemeinsame Längsachse drehbar sind und eine Drehachse des frei drehbaren anderen Lenkerarms (19) auf der Längsmittelachse des Koppelorgans liegt.

2. Hubladebühne nach Anspruch 1, **dadurch gekennzeichnet, dass** der andere Lenkerarm (19) frei drehbar an mindestens einem Teil des Koppelorgans gelagert ist.

3. Hubladebühne nach Anspruch 1 oder 2, **dadurch gekennzeichnet, dass** die Lenkerarme (18, 19) gegenüberliegenden Enden des Koppelorgans zugeordnet sind.

4. Hubladebühne nach einem der vorhergehenden Ansprüche, **dadurch gekennzeichnet, dass** der eine Lenkerarm (18) mit einem Ende (28) des Koppelorgans fest, insbesondere unverdrehbar, verbunden ist und auf dem oder am gegenüberliegenden Ende des Koppelorgans der andere Lenkerarm (19) frei drehbar gelagert ist.

5. Hubladebühne nach einem der vorhergehenden Ansprüche, **dadurch gekennzeichnet, dass** der Hubzylinder (22) am Koppelorgan angreift, vorzugsweise in der Nähe eines Endbereichs des Koppelorgans, der dem fest mit dem einen Lenkerarm (18) verbundenen Ende (25) des Koppelorgans gegenüberliegt.

6. Hubladebühne nach einem der vorhergehenden Ansprüche, **dadurch gekennzeichnet, dass** das Koppelorgan als längliches Rohr, insbesondere Torsionsrohr (23), ausgebildet ist, das teilweise um seine Längsachse, die insbesondere einer Torsionsachse (36) entspricht, elastisch verdrehbar ausgebildet ist.

7. Hubladebühne nach einem der vorhergehenden Ansprüche, **dadurch gekennzeichnet, dass** gegenüberliegenden Enden des länglichen Rohrs, insbesondere des Torsionsrohrs (23), die Lenkerarme (18, 19) zugeordnet sind, vorzugsweise derart, dass die Verbindungsstellen der Lenkerarme (18, 19) mit dem Rohr, vorzugsweise dem Torsionsrohr (23), unmittelbar auf der Längs- bzw. Torsionsachse (36) des Rohrs, insbesondere des Torsionsrohrs (23), liegen.

8. Hubladebühne nach einem der vorhergehenden Ansprüche, **dadurch gekennzeichnet, dass** die Drehachse des anderen, gegenüber dem Koppelorgan verschwenkbaren Lenkerarms (19) auf der Längs- bzw. Torsionsachse (36) des das Koppelorgan bildenden Rohrs, insbesondere Torsionsrohrs (23), liegt.

9. Hubladebühne nach einem der vorhergehenden Ansprüche, **dadurch gekennzeichnet, dass** das Koppelorgan mehrteilig, vorzugsweise zweiteilig ausgebildet ist, insbesondere ein längeres Koppelteil und eine kürzeres Koppelteil aufweist, wobei bevorzugt das längere Koppelteil fest mit dem einen Lenkerarm (18) verbunden ist und das kürzere Koppelteil fest, insbesondere unverdrehbar, am anderen Lenkerarm (19) angeordnet ist.

10. Hubladebühne nach Anspruch 9, **dadurch gekennzeichnet, dass** das kürzere Koppelteil verdrehbar am oder im längeren Koppelteil gelagert ist.

11. Hubladebühne nach Anspruch 9, **dadurch gekennzeichnet, dass** das längere Koppelteil als ein Torsionsrohr (23) und/oder das kürzere Koppelteil als ein kurzer Rohrstutzen (24) ausgebildet ist.

12. Hubladebühne nach Anspruch 11, **dadurch gekennzeichnet, dass** der kurze Rohrstutzen (24) drehbar im oder auf dem Endbereich des Torsionsrohrs (23) gelagert ist, vorzugsweise der kurze Rohrstutzen (24) zumindest teilweise in das freie Ende (26) des Torsionsrohrs (23) eingeschoben oder auf das freie Ende (26) des Torsiönsrohrs (23) aufgeschoben ist.

13. Hubladebühne nach einem der vorhergehenden Ansprüche, **dadurch gekennzeichnet, dass** im Bereich eines freien Endes (26) des Torsionsrohrs (23) eine Lagerstelle (27) zur Anlenkung eines Endes des Hubzylinders (22) angeordnet ist, vorzugsweise die Lagerstelle (27) als ein kurzer Hebel ausgebildet ist, der unverdrehbar auf den vom freien Ende (26) ausgehenden Endbereich des Torsionsrohrs (23) befestigt ist, wobei vorzugsweise am freien Ende des Hebels gelenkig ein Ende des Hubzylinders (22) angelenkt ist.

## Claims

1. Tail lift comprising a loading platform (17) and a lifting mechanism (15) for lifting, lowering and pivoting the loading platform (17), wherein the lifting mechanism (15) comprises two link arms (18, 19), a coupling member between the link arms (18, 19), and a lifting cylinder (22) arranged in the vicinity of a link arm (19), wherein one link arm (18) is non-rotatably connected to the coupling member and another link arm (19) is rotatably connected to the coupling member or is mounted on at least part of the coupling member, **characterized in that** the link arms (18, 19) can be rotated relative to one another about a common longitudinal axis situated on a longitudinal centre axis of the coupling member, and an axis of rotation of the freely rotatable other link arm (19) is situated on the longitudinal centre axis of the coupling member.

2. Tail lift according to Claim 1, **characterized in that** the other link arm (19) is mounted in a freely rotatable manner on at least part of the coupling member.

3. Tail lift according to Claim 1 or 2, **characterized in that** the link arms (18, 19) are assigned to opposite ends of the coupling member.

4. Tail lift according to one of the preceding claims, **characterized in that** one link arm (18) is fixedly, in particular non-rotatably, connected to one end (25) of the coupling member and the other link arm (19) is mounted in a freely rotatably manner on the or at the opposite end of the coupling member.

5. Tail lift according to one of the preceding claims, **characterized in that** the lifting cylinder (22) acts on the coupling member, preferably in the vicinity of an end region of the coupling member that is situated opposite to the end (25) of the coupling member that is fixedly connected to one link arm (18).

6. Tail lift according to one of the preceding claims, **characterized in that** the coupling member is designed as an elongate tube, in particular torsion tube (23), which is designed such that it can be twisted elastically in part about its longitudinal axis, which corresponds in particular to a torsion axis (36).

7. Tail lift according to one of the preceding claims, **characterized in that** the link arms (18, 19) are assigned to opposite ends of the elongate tube, in particular the torsion tube (23), preferably in such a way that the connecting points of the link arms (18, 19) with the tube, preferably the torsion tube (23), are situated directly on the longitudinal or torsion axis (36) of the tube, in particular the torsion tube (23).

8. Tail lift according to one of the preceding claims, **characterized in that** the axis of rotation of the other link arm (19) which can be pivoted with respect to the coupling member is situated on the longitudinal or torsion axis (36) of the tube, in particular torsion tube (23), forming the coupling member.

9. Tail lift according to one of the preceding claims, **characterized in that** the coupling member is of multi-part, preferably two-part, design, in particular having a longer coupling part and a shorter coupling part, with preferably the longer coupling part being fixedly connected to one link arm (18) and the shorter coupling part being fixedly, in particular non-rotatably, arranged on the other link arm (19).

10. Tail lift according to Claim 9, **characterized in that** the shorter coupling part is rotatably mounted on or in the longer coupling part.

11. Tail lift according to Claim 9, **characterized in that** the longer coupling part is designed as a torsion tube (23) and/or the shorter coupling part is designed as a short pipe stub (24).

12. Tail lift according to Claim 11, **characterized in that** the short pipe stub (24) is rotatably mounted in or on the end region of the torsion tube (23), with the short pipe stub (24) preferably being inserted at least partially into the free end (26) of the torsion tube (23) or being pushed onto the free end (26) of the torsion tube (23).

13. Tail lift according to one of the preceding claims, **characterized in that** a mounting point (27) for articulating one end of the lifting cylinder (22) is arranged in the region of a free end (26) of the torsion tube (23), the mounting point (27) preferably being designed as a short lever which is non-rotatably fastened to the end region of the torsion tube (23) that starts from the free end (26), wherein one end of the lifting cylinder (22) is preferably mounted in an articulated manner on the free end of the lever.

## Revendications

1. Hayon élévateur comprenant une plate-forme de chargement (17) et un mécanisme de levage (15) pour le levage, l'abaissement et le pivotement de la plate-forme de chargement (17), le mécanisme de levage (15) présentant deux bras oscillants (18, 19), un organe d'accouplement entre les bras oscillants (18, 19) et un cylindre de levage (22) disposé à proximité d'un bras oscillant (19), un bras oscillant (18) étant connecté de manière non rotative à l'organe d'accouplement et un autre bras oscillant (19) étant connecté de manière rotative à l'organe d'accouplement ou étant monté sur au moins une partie de l'organe d'accouplement, **caractérisé en ce que** les bras oscillants (18, 19) peuvent tourner l'un par rapport à l'autre autour d'un axe longitudinal commun situé sur un axe médian longitudinal de l'organe d'accouplement, et un axe de rotation de l'autre bras oscillant (19) librement rotatif se situe sur l'axe médian longitudinal de l'organe d'accouplement.

2. Hayon élévateur selon la revendication 1,
**caractérisé en ce que** l'autre bras oscillant (19) est monté de manière librement rotative sur au moins une partie de l'organe d'accouplement.

3. Hayon élévateur selon la revendication 1 ou 2, **caractérisé en ce que** les bras oscillants (18, 19) sont associés à des extrémités opposées de l'organe d'accouplement.

4. Hayon élévateur selon l'une quelconque des revendications précédentes, **caractérisé en ce que** l'un des bras oscillants (18) est connecté fixement, notamment de manière non rotative, à une extrémité (25) de l'organe d'accouplement et l'autre bras oscillant (19) est monté de manière librement rotative sur l'organe d'accouplement ou sur l'extrémité opposée de l'organe d'accouplement.

5. Hayon élévateur selon l'une quelconque des revendications précédentes, **caractérisé en ce que** le cylindre de levage (22) vient en prise sur l'organe d'accouplement, de préférence à proximité d'une région d'extrémité de l'organe d'accouplement qui est opposée à l'extrémité (25) de l'organe d'accouplement connectée fixement à l'un des bras oscillants (18).

6. Hayon élévateur selon l'une quelconque des revendications précédentes, **caractérisé en ce que** l'organe d'accouplement est réalisé sous forme de tube allongé, notamment sous forme de tube de torsion (23), qui est réalisé en partie de manière à pouvoir tourner élastiquement autour de son axe longitudinal, qui correspond notamment à un axe de torsion (36).

7. Hayon élévateur selon l'une quelconque des revendications précédentes, **caractérisé en ce que** les bras oscillants (18, 19) sont associés aux extrémités opposées du tube allongé, notamment du tube de torsion (23), de préférence de telle sorte que les points de connexion des bras oscillants (18, 19) au tube, de préférence au tube de torsion (23), se trouvent directement sur l'axe longitudinal ou l'axe de torsion (36) du tube, notamment du tube de torsion (23).

8. Hayon élévateur selon l'une quelconque des revendications précédentes, **caractérisé en ce que** l'axe de rotation de l'autre bras oscillant (19) pouvant pivoter par rapport à l'organe d'accouplement se trouve sur l'axe longitudinal ou l'axe de torsion (36) du tube formant l'organe d'accouplement, notamment du tube de torsion (23).

9. Hayon élévateur selon l'une quelconque des revendications précédentes, **caractérisé en ce que** l'organe d'accouplement est réalisé en plusieurs parties, de préférence en deux parties, notamment une partie d'accouplement plus longue et une partie d'accouplement plus courte, et de préférence la partie d'accouplement plus longue est connectée fixement à l'un des bras oscillants (18) et la partie d'accouplement plus courte est disposée fixement, notamment de manière non rotative, sur l'autre bras oscillant (19).

10. Hayon élévateur selon la revendication 9,
**caractérisé en ce que** la partie d'accouplement plus courte est montée de manière rotative sur ou dans la partie d'accouplement plus longue.

11. Hayon élévateur selon la revendication 9,
**caractérisé en ce que** la partie d'accouplement plus longue est réalisée sous forme de tube de torsion (23) et/ou la partie d'accouplement plus courte est réalisée sous forme de tubulure courte (24).

12. Hayon élévateur selon la revendication 11,
**caractérisé en ce que** la tubulure courte (24) est montée de manière rotative dans ou sur la région d'extrémité du tube de torsion (23), de préférence la tubulure courte (24) est enfoncée au moins en partie dans l'extrémité libre (26) du tube de torsion (23) ou est poussée sur l'extrémité libre (26) du tube de torsion (23).

13. Hayon élévateur selon l'une quelconque des revendications précédentes, **caractérisé en ce que** dans la région d'une extrémité libre (26) du tube de torsion (23) est disposé un point d'appui (27) pour l'articulation d'une extrémité du cylindre de levage (22), de préférence le point d'appui (27) est réalisé sous forme d'un levier court, qui est fixé de manière non rotative sur la région d'extrémité du tube de torsion (23) partant de l'extrémité libre (26), une extrémité du cylindre de levage (22) étant de préférence articulée à l'extrémité libre du levier.
